# EUROPEAN PATENT APPLICATION

(11) **EP 1 151 785 A2**
(43) Date of publication of application: **07.11.2001**
(21) Application number: 01660080.1
(22) Date of filing: 02.05.2001
(51) Int. Cl.: B01D 53/58, B01D 53/78, C05F 17/02

(54) **Method for purification of exhaust gas in a composting process and for heat recovery**

(30) Priority: 04.05.2000 FI 20001034
(71) Applicant: VAPO OY, 40101 Jyväskylä (FI)
(72) Inventor: Nummela, Jyri, 40200 Jyväskylä (FI)
(74) Representative: Helke, Kimmo Kalervo

(57) **Abstract**

The invention relates to a method for the purification of exhaust gas in a composting process and for heat recovery, in which method the exhaust gas is led to a two-stage washing process, in the first part (3) of which the heat of the exhaust gas is recovered from the circulating wash water of the first part, in which case the condensing excess water is brought into this circulating wash water, and can be easily removed from the process. In the second part (4), the anhydrous ammonia is bound by reducing the pH level of the circulating water of the second part to the level 1 - 3, in which case the anhydrous ammonia is bound to this second circulating wash water.

## Description

The present invention relates to a method for the purification of exhaust gas in a composting process and for heat recovery, in which method the exhaust gas is led to a washing process, in which, in order to bind anhydrous ammonia, the pH value of the circulating wash water, in the washing process, is reduced to a level of 1 - 3, and in which washing process the heat of the exhaust gas is recovered from the circulating wash water, in which case water is condensed from the exhaust gas into the wash water, which condensing water is removed from the circulating wash water.

The air circulation and washing processes of a tunnel composting plant are known from Finnish patent 100191. To accelerate the composting process, the composting takes place with the aid of forced air circulation, for which purpose oxygen-rich air is fed under the compost material. The intake air is either circulation air, or heated fresh air, or a mixture of both. The conditions of the composting process are regulated as desired with the aid of the amount and temperature of the air being fed in. The composting process produces heat, which is partly bound to the exhaust gas in the form of water vapour.

It is wished to recover the heat of the composting process and remove the impurities of the gas before it is allowed to enter the environment. The exhaust gas has a large anhydrous ammonia content, which is typically in the range 100 - 1000 ppm. According to the state of the art, this is removed by using a wet washer. The effectiveness of the removal can be increased by reducing the pH value of the circulating water to the range 1 - 3, for example, by adding acid. The anhydrous ammonia is then bound to the wash water in the form of ammonium sulphate. If heat is recovered from the circulating water in the washer, a considerable amount of water, which must be removed from the circulating water in a continuous process, condenses from the exhaust gas into the circulating water. Due to the removal of the anhydrous ammonia, the water to be removed has a low pH value and must therefore be neutralized, for example, with lye. It is also difficult to utilize the removed water. After lye has been added, it is preferable not to spray it on the finished compost, which would otherwise often be desirable. The exhaust gas is led from the washer to a bio-filter, which removes compounds that cause odours. Part of the exhaust gases can be led back to the composting tunnels as circulating air.

The invention is intended to eliminate the defects of the state of the art referred to above and for this purpose create an improved method for cleaning the exhaust gas of a composting process and for recovering heat. The characterizing features of the invention are stated in the accompanying Claims.

According to the invention, the waste water that has condensed from the washing process, which is divided into two parts, can be either led to a sewer or returned to the finished compost, if desired. By means of the method according to the invention, the use of lye is almost entirely eliminated. The nitrogen that is released along with the compost gas can be returned to the compost as a nutrient.

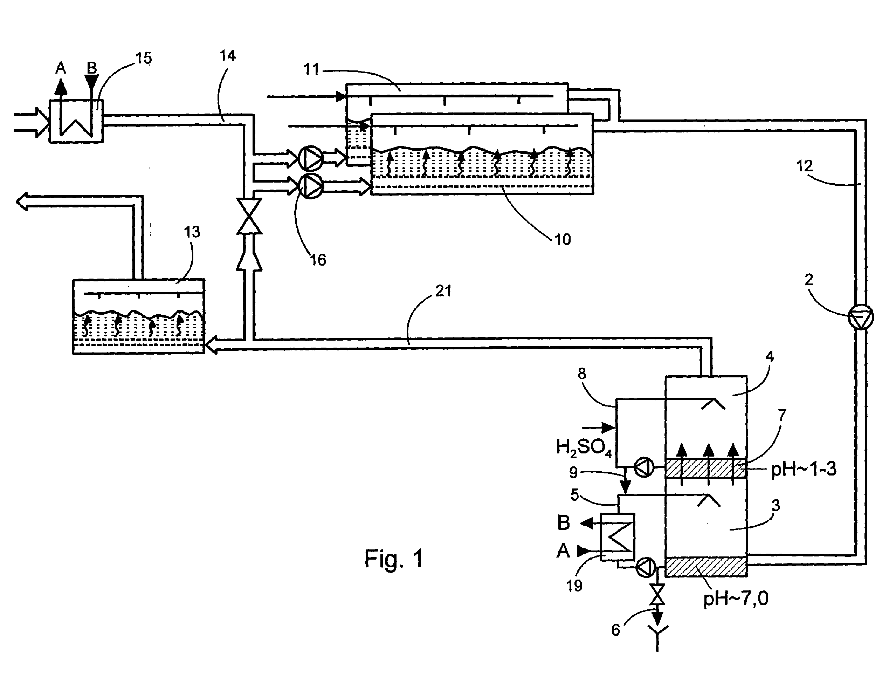

In the following, the invention is examined in greater detail with the aid of the example of an embodiment, which is shown in the accompanying figure.

Though the figure shows two composting tunnels, the number of tunnels naturally depends on the size of the plant and on other dimensioning. In each composting tunnel, there is an air-distribution base 10, through which air is fed through the material, and which then exhausts to the exhaust line 12.

The air feed takes place as follows. The intake air, which is usually hall air, is heated in a heat exchanger 15 and is led to each composting tunnel with the aid of its own fan 16 according to a selected program. During the composting process, the intake air is heated and mixed, so that it exhausts to the exhaust duct 12 in a saturated state. An exhaust fan 2 is used to blow the air through washers 3 and 4 to a duct 21, which takes it to a bio-filter 13. After this, the air can be exhausted to the environment.

The gas washers 3 and 4 are essential in terms of the present invention. Thus, the washing process is divided into two parts, in which the lower washing process 3 collects heat from the exhaust gas and thus condenses the excess water from it. The upper washing process 4 removes the anhydrous ammonia from the exhaust gas at a low pH value.

The lower washing process 3 includes a wash circulation 5, which contains a heat exchanger 15 for the recovery of the heat. This is connected to the replacement air heat exchanger 15, to exploit the heat. Naturally, the heat can also be utilized at some other desired point. Despite a small outlet flow, to be described below, from the upper washer, the circulating water has a pH value of about 7 at this point. Thus, the outlet water can be either led to a sewer (line 6) or sprayed into the finished compost.

The first, i.e. the lower washing process 3 cools the saturated exhaust gas of the composting process by 5 - 40°C, preferably by 15 - 30°C.

The upper washer 4 is placed, in a known manner, on top of the lower washer, and in this case the upper washer has a base 7, through which the gas being cleaned is led. The pH value of the circulating water in the circulating water line 8 of the upper washer 4 is about 2 (generally in the range 1 - 3). Thus, the incoming anhydrous ammonia is bound in a known manner as a salt of the acid being used. When sulphuric acid H₂SO₄ is used, the anhydrous ammonia is bound as ammonia sulphate and remains in the circulating water. To prevent it becoming concentrated, a small amount of the circulating water 8 must be removed as an outlet flow 9 to the lower washer, the amount of the outlet flow being 0,1 - 2 % of the circulation flow of the second washing process. The outlet flow is neutralized in the considerably larger circulating flow of the lower washer, the pH value of which does not essentially change for this reason. Because the inlet and outlet flows of the upper washer are essentially in the same state, practically no condensation takes place in this washer. If necessary, water can be added to replace the outlet flow.

## Claims

1. A method for the purification of exhaust gas in a composting process and for heat recovery, in which method the exhaust gas is led to a washing process, in which, in order to bind the anhydrous ammonia, the pH value of the wash water circulating in the washing process is reduced to a level of 1 - 3, and in which washing process (3, 4) the heat of the exhaust gas is recovered from the circulating wash water, so that the water condenses from the exhaust gas into the wash water, which condensing water is removed from the circulating wash water, **characterized in that** the washing process is divided into two parts, in the first part (3) of which the heat of the exhaust gas is recovered from the circulating wash water of the first part, when the condensing excess water is brought into this circulating wash water, and the anhydrous ammonia in the second part (4) is bound by reducing the pH level of the circulating water of the second part to the level referred to, in which case the anhydrous ammonia is bound to this second circulating wash water.

2. A method according to Claim 1, **characterized in that** the pH value of the second part (4) is reduced by feeding a selected acid, preferably sulphuric acid H₂SO₄ to the wash-water circulation.

3. A method according to Claim 2, **characterized in that** a small side flow (9) from the wash-water circulation of the second part is led to the wash-water circulation of the first part, to prevent the crystallization of an ammonium salt, for example ammonium sulphate, corresponding to the acid referred to .

4. A method according to any of Claims 1 - 3, **characterized in that** the excess water removed from the first part is sprayed back into the finished compost.

5. A method according to any of Claims 1 - 4, **characterized in that** the washing processes (3, 4) are set on top of each other.

6. A method according to any of Claims 1 - 5, **characterized in that** the process is dimensioned in such a way that the anhydrous ammonia content of the exhaust gas leaving the second process (4) is less than 5 ppm, having been in the range 100-1000 ppm in the exhaust gas entering the process.

7. A method according to any of Claims 1 - 6, **characterized in that** the first washing process (3) cools the saturated exhaust gas of the composting process by 5 - 40°C, preferably by 15-30°C.

8. A method according to any of Claims 1 - 7, **characterized in that** an outlet flow is led form the second washing process to the first washing process, the amount of the outlet flow being 0,1 - 2 % of the circulation flow of the second washing process.
